# EUROPEAN PATENT APPLICATION

(11) **EP 4 393 990 A1**
(43) Date of publication of application: **03.07.2024**
(21) Application number: 22307059.0
(22) Date of filing: 28.12.2022
(51) Int. Cl.: C08K 5/00, C08K 5/37

(54) **THIOL MASTERBATCH COMPOSITIONS AND METHODS OF PREPARING ULTRAVIOLET-CURABLE COMPOSITIONS**

(71) Applicant: ARKEMA FRANCE, 92700 Colombes (FR)
(72) Inventor: MACNEILL, Christopher Michael, EXTON, 19341 (US); FORTMAN, George Charles, EXTON, 19341 (US); SCHOLTE, Jon Paul, EXTON, 19341 (US); HERR, Donald Eric, EXTON, 19341 (US)
(74) Representative: Arkema Patent

(57) **Abstract**

Thiol masterbatch composition are provided for preparing an ultraviolet-curable composition, the thiol masterbatch composition comprising at least 70 % by weight of thiol compounds and at least one stabilizer. Kits for providing an ultraviolet-curable composition include a first part containing therein a thiol masterbatch composition, and a second part separate from the first part and containing therein a (meth)acrylate composition. Methods of preparing an ultraviolet-curable composition include combining a thiol masterbatch composition and a (meth)acrylate composition.

## Description

### TECHNICAL FIELD

The present disclosure relates to a thiol masterbatch composition. The thiol masterbatch composition comprises thiol compounds and at least one stabilizer. The disclosure also relates to a kit for providing an ultraviolet-curable composition and a method of preparing an ultraviolet-curable composition.

### BACKGROUND

Ultraviolet-curable compositions, such as thiol-(meth)acrylate formulations, can be used in a variety of applications, such as ultraviolet-curable nail gels, graphic arts, coatings, and 3D printing and manufacturing. However, thiol-(meth)acrylate formulations have certain limitations during storage, such as premature polymerization. For example, thiol-(meth)acrylate formulations without suitable stabilizers may gel when exposed to elevated temperatures, such as during transport or when stored. Such difficulty limits their application due to performance requirements.

Stabilizers can be added to thiol-(meth)acrylate formulations to increase stability. However, it may be challenging to develop stabilizer packages to increase stability across a variety of thiol-(meth)acrylate formulations, while maintaining desirable performance properties. Thus, there is a need for thiol masterbatch compositions that can be added to (meth)acrylate compositions and methods of making ultraviolet-curable compositions that promote desirable performance properties and long term stability, even at high temperatures.

Embodiments of thiol masterbatch compositions, kits for providing an ultraviolet-curable composition, and methods of preparing ultraviolet-curable compositions disclosed herein overcome drawbacks associated with reduced stability of ultraviolet-curable compositions.

### SUMMARY

A first aspect disclosed herein is a thiol masterbatch composition for preparing an ultraviolet-curable composition, the thiol masterbatch composition comprising at least 70% by weight of thiol compounds, based on the total weight of the thiol masterbatch composition, and at least one stabilizer. The thiol compounds can be chosen from primary thiols, secondary thiols, or combinations thereof. When at least 50% by weight of the thiol compounds are primary thiols, based on the total weight of the thiol compounds, the thiol masterbatch composition may comprise at least 22,000 parts per million by weight (ppm) of stabilizer, based on the total weight of the thiol masterbatch composition. When less than 50% by weight of the thiol compounds are primary thiols, based on the total weight of the thiol compounds, the thiol masterbatch composition may comprise at least 10,000 parts per million by weight (ppm) of stabilizer, based on the total weight of the thiol masterbatch composition.

Another aspect disclosed herein is a kit for providing an ultraviolet-curable composition. The kit comprises a first part comprising a thiol masterbatch composition, wherein the thiol masterbatch composition comprises at least 70% by weight of thiol compounds, based on the total weight of the thiol masterbatch composition, and at least one stabilizer. The kit further comprises a second part separate from the first part and comprising therein a (meth)acrylate composition comprising a (meth)acrylate monomer, a (meth)acrylate oligomer, and a photoinitiator.

Another aspect disclosed herein is a method of preparing an ultraviolet-curable composition. The method may comprise combining a thiol masterbatch composition and a (meth)acrylate composition to obtain an ultraviolet-curable composition. The thiol masterbatch composition comprises at least 70% by weight of thiol compounds, based on the total weight of the thiol masterbatch composition, and at least one stabilizer. The (meth)acrylate composition comprises a (meth)acrylate monomer, a (meth)acrylate oligomer, and a photoinitiator.

This summary is provided to introduce a selection of concepts that are further described in the detailed description. This summary is not intended to identify key or essential features of the claimed subject matter, nor is it intended to be used as an aid in limiting the scope of the claimed subject matter.

Additional features and advantages of the described embodiments will be set forth in the detailed description that follows. The additional features and advantages of the described embodiments will be, in part, readily apparent to those skilled in the art from that description or recognized by practicing the described embodiments, including the detailed description that follows as well as the claims.

### DETAILED DESCRIPTION

### Definitions

As used herein, the term "comprises a" can mean "comprises one or more".

Unless otherwise mentioned, the weight percentages in a compound or a composition are expressed relative to the weight of the compound, respectively of the composition.

The term "thiol masterbatch composition" means a mixture that includes thiols.

The term "ultraviolet-curable composition" means a composition that can be cured to form a cured product upon exposure to ultraviolet radiation.

The term "thiol compounds" means an organosulfur compound of the form R-SH where R represent an organic substituent.

The term "primary thiol" means a chemical compound where the-SH is attached to a carbon atom, and the carbon atom with -SH attached is attached to one other carbon atom.

The term "secondary thiol" means a chemical compound where the -SH is attached to a carbon atom, and the carbon atom with -SH attached is attached to two other carbon atoms.

The term "(meth)acrylate" means acrylate or methacrylate. The term "acrylate" means an acryloyloxy group (-O-C(=O)-CH=CH₂). The term "methacrylate" means a methacryloyloxy group (-O-C(=O)-C(CH₃)=CH₂).

As used herein, the term "monomer" refers to a molecule with one or more polymerizable functional groups. The monomer has a single molecular weight, typically below 1000 g/mol, preferably 100 to 950 g/mol. As is recognized, commercial products of a particular monomer may contain impurities or other chemical species.

As used herein, the term "oligomer" or "oligomers" refers to molecules with a distribution of molecular weights and typically having one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol.

The term "reactive diluent" means a chemical compound that reduces a viscosity of the material it is added to and participates in crosslinking upon curing.

The term "non-reactive diluent" means a chemical compound that reduces a viscosity of the material it is added to and does not participate in crosslinking upon curing.

As used herein, the term "stabilizer" means a chemical compound or material that increases a stability of the thiol masterbatch composition or the ultraviolet-curable composition, as described herein.

The term "radical scavenger compound" means a chemical compound or material that removes or deactivates free radical products.

The term "hydroperoxide decomposer compound" means a chemical compound or material that decomposes hydroperoxide compounds.

The term "hydrogen donor compounds" means a chemical compound or material that includes abstractable hydrogens.

The terms "mass fraction" and "weight fraction" are used herein interchangeably and are to be regarded as equivalent to each other with respect to embodiments or examples herein.

The term "photoinitiator" may be considered any type of substance that, upon exposure to radiation (e.g., actinic radiation), forms species that initiate the reaction and curing of polymerizing organic substances present in a curable composition.

### Method of preparing an ultraviolet-curable composition

In embodiments, an ultraviolet-curable composition is prepared. A method of preparing the ultraviolet-curable composition can comprise combining a thiol masterbatch composition and a (meth)acrylate composition to form an ultraviolet-curable composition.

The thiol masterbatch composition of the method can include any embodiments, both individually or in any combination, of the thiol masterbatch composition described in this disclosure.

The (meth)acrylate composition of the method can include any embodiments, both individually or in any combination, of the (meth)acrylate composition described in this disclosure.

A weight ratio of the thiol masterbatch composition to (meth)acrylate composition may be adjusted depending on the desired properties of the ultraviolet-curable composition, such as curing time, stability, and storage conditions, or desired properties of a cured product formed from curing the ultraviolet-curable composition, such as gel strength, and oxygen inhibition at the surface, and shrinkage.

In embodiments, a weight ratio of the thiol masterbatch composition to the (meth)acrylate composition in the ultraviolet-curable composition may be from 1:1 to 1:20, from 1:1 to 1:15, 1:1 to 1:10, from 1:1 to 1:9, from 1:1 to 1:8, from 1:1 to 1:7, from 1:1 to 1:5, from 1:1 to 1:4, from 1:1 to 1:3, from 1:1 to 1:2, from 1:2 to 1:20, from 1:2 to 1:15, from 1:2 to 1:10, from 1:2 to 1:9, from 1:2 to 1:8, from 1:2 to 1:7, from 1:2 to 1:5, from 1:2 to 1:4, from 1:2 to 1:3, from 1:3 to 1:20, from 1:3 to 1:15, from 1:3 to 1:10, from 1:3 to 1:9, from 1:3 to 1:8, from 1:3 to 1:7, from 1:3 to 1:5, from 1:3 to 1:4, from 1:4 to 1:20, from 1:4 to 1:15, from 1:4 to 1:10, from 1:4 to 1:9, from 1:4 to 1:8, from 1:4 to 1:7, from 1:4 to 1:5, or any and all subranges formed from any of these endpoints.

### Thiol masterbatch composition

In embodiments, the thiol masterbatch composition comprises thiol compounds and at least one stabilizer. In embodiments, the thiol masterbatch composition consists of, or consists essentially of, thiol compounds and stabilizers.

### Thiol compounds of the thiol masterbatch composition

In embodiments, the thiol compounds are chosen from primary thiols, secondary thiols, or combinations thereof. In embodiments, the thiol compounds are primary thiols. In other embodiments, the thiol compounds are secondary thiols.

In embodiments, the thiol compounds include at least 5 percent by weight (wt.%) of primary thiols, such as at least 10 wt.%, at least 20 wt.%, at least 30 wt.%, at least 50 wt.%, at least 70 wt.%, or at least 95 wt.% of primary thiols, based on the total weight of the thiol compounds.

Examples of suitable primary thiols include but are not limited to any polythiol functional molecule, oligomer, or polymer. Some polythiols have the formula R-(SH)ₙ, where n is at least 2, and preferably from 2 to 4, and R is an aliphatic or aromatic organic group of valence n. Some examples include: ethylene glycol bis(thioglycolate), 2,2'-(Ethylenedioxy)diethanethiol, 1,6-hexanedithiol, tetraethylene glycol dithiol, hexa(ethylene glycol) dithiol, ethylene glycol bis(3-mercaptopropionate), Ethylene glycol bis-mercaptoacetate, 1,2-propylene glycol (3-mercaptopropionate), pentaerythritol tetrakis(3-mercaptopropionate), Tris[2-(3-mercaptopropionyloxy)ethyl]isocyanurate, pentaerythritol tetrakis(3-mercaptopropionate), trimethylolpropane tris (3-mercaptopropionate, glycol di-(3-mercaptopropionate), pentaerythritol tetramercaptoacetate, trimethylolpropane trimercaptoacetate, glycol dimercaptoacetate, ethoxylated trimethylpropane tri(3-mercaptopropionate) 700 (ETTMP 700), ethoxylated trimethylpropane tri(3-mercapto-propionate) 1300 (ETTMP 1300), propylene glycol 3-mercaptopropionate 800 (PPGMP 800), propylene glycol 3-mercaptopropionate 2200 (PPGMP 2200). ethylene glycol bis(3-mercaptopropionate), trimethylolpropane tris(thioglycolate), pentaerythritol tetrakis(thioglycolate).

In embodiments, the thiol compounds include at least 5 wt.% of secondary thiols, such as at least 10 wt.%, at least 20 wt.%, at least 30 wt.%, at least 50 wt.%, at least 70 wt.%, or at least 95 wt.% of secondary thiols, based on the total weight of the thiol compounds.

Examples of suitable secondary thiols include but are not limited to a secondary thiol version of any of the primary thiol examples shown above. The secondary thiol can be any polythiol functional molecule, oligomer, or polymer. Useful polythiols have the formula R-(SH)ₙ, where n is at least 2, and preferably from 2 to 4, and R is an aliphatic or aromatic organic group of valence n. Some examples include: ethylene glycol bis (3-mercapto butylate), 1,2-propylene glycol (3-mercapto butylate), pentaerythritol tetrakis (3-mercaptobutylate), and/or trimethylolpropane tris(3 -mercaptobutyrate). Pentaerythritol tetrakis(3-mercaptobutanonate), 1,3,5-tris[2-(3-mercaptobutanoyloxy)ethyl]-1,3,5-triazine-2,4,6(1H,3H,5H)-trione, 1,4-bis(1-mercaptoethyl)benzene, bisphenol A bis (3-mercaptobutylate), 1,4-bis(3-mercaptobutylyloxy) butane, or combinations thereof.

In embodiments, the thiol compounds can include any of the thiol compounds disclosed herein. In embodiments, the thiol compounds are chosen from pentaerythritol tetrakis(3-mercaptopropionate), pentaerythritol tetrakis(3-mercaptobutylate), or combinations thereof. In embodiments, the thiol compounds are selected from the group consisting of pentaerythritol tetrakis(3-mercaptopropionate), pentaerythritol tetrakis(3-mercaptobutylate), and combinations thereof. In embodiments, the thiol compounds comprise pentaerythritol tetrakis(3-mercaptopropionate). In embodiments, the thiol compounds are pentaerythritol tetrakis(3-mercaptopropionate). In embodiments, the thiol compounds comprise pentaerythritol tetrakis(3-mercaptobutylate). In embodiments, the thiol compounds are pentaerythritol tetrakis(3-mercaptobutylate).

The amount of the thiol compounds in the thiol masterbatch composition may vary depending on desired properties of the ultraviolet-curable composition comprising the thiol masterbatch composition, such as polymerization rate, mechanical properties, tack free, and shrinkage.

In embodiments, the thiol masterbatch composition can include at least 70 wt.% of thiol compounds, based on the total weight of the thiol masterbatch composition. For instance, in embodiments, the thiol masterbatch composition can include at least 72 wt.%, at least 75 wt.%, or at least 80 wt.% of thiol compounds, based on the total weight of the thiol masterbatch composition. In embodiments, the thiol masterbatch composition can comprise from 70 wt.% to 99 wt.% of thiol compounds, based on the total weight of the thiol masterbatch composition. Without intending to be bound by any particular theory, it is believed that a thiol masterbatch composition comprising a high amount of thiol compounds, such as at least 70 wt.% of thiol compounds, can be added to the (meth)acrylate composition to provide a sufficient concentration of thiol compounds in an ultraviolet-curable composition formed from the combination of the thiol masterbatch composition and the (meth)acrylate composition.

It should be understood that, when the thiol masterbatch composition includes more than one discrete type of thiol compound, the weight fraction of the thiol compounds in the thiol masterbatch composition equals the sum of the individual weight fractions of every discrete type of thiol compound in the thiol masterbatch composition.

### Stabilizer of the thiol masterbatch composition

In embodiments, the thiol masterbatch composition comprises at least one stabilizer, at least two stabilizers, or at least three stabilizers. In embodiments, the stabilizers can include radical scavenger compounds, hydroperoxide decomposer compounds, hydrogen donor compounds, or combinations thereof.

Examples of suitable radical scavenger compounds can include phenolic antioxidants such as butylhydroxytoluene, methoxyhydroquinone, hydroquinone, 4-terbutylcatechol, a-tocopherol, pyrogallol, N-nitroso-n-phenylhydroxylamine aluminum salt, ethyl gallate, propyl gallate, octyl gallate, dodecyl gallate, 2,4,5-trihydroxybutyrophenone, catechol, and combination thereof.

Examples of suitable hydroperoxide decomposer compounds can include compounds based on organophosphorous, organoantimony, organotin, or organobismuth. The hydroperoxide decomposer compounds can be chosen from any typical phosphite, phosphate, phosphonates, or antimonates such as phosphorous acid, triphenylphosphite, triphenylphosphine, triphenyl antimony, tris(2,4-di-(tert)butylphenyl)phosphite, tri-p-tolyl-phosphine, tri-m-tolyl-phosphine, phenylphosphonic acid and diphenyl (p-tolyl)phosphine, diphenyl isodecyl phosphite, poly(dipropylene glycol)phenyl phosphites, spirophosphites, distearyl pentaerithrytol diphosphites, compounds such as Irgaphos^{®} chemicals from Ciba/BASF, and combinations thereof.

Examples of suitable hydrogen donor compounds can include acidic compounds that have a pKa between 1-5 such as phosphoric acid, phosphorous acid, oxalic acid, p-toluenesulfonic acid, ascorbic acid, barbituric acid, diphenylphosphinic acid, and combinations thereof.

In embodiments, the thiol masterbatch composition may comprise at least one stabilizer chosen from triphenyl antimony, triphenylphosphite, butylated hydroxyltoluene, 4-methoxyphenol, propyl gallate, oxalic acid, or a phosphite. In embodiments, the thiol masterbatch composition may comprise at least one stabilizer chosen from triphenyl antimony, triphenylphosphite, butylated hydroxyltoluene, 4-methoxyphenol, propyl gallate, or combinations thereof. In embodiments, at least one stabilizer may be selected from the group consisting of triphenyl antimony, triphenylphosphite, butylated hydroxyltoluene, 4-methoxyphenol, propyl gallate, oxalic acid, a phosphite and combinations thereof. In embodiments, at least one stabilizer may be selected from the group consisting of triphenyl antimony, triphenylphosphite, butylated hydroxyltoluene, 4-methoxyphenol, propyl gallate, and combinations thereof. In embodiments, the stabilizers may be selected from the group consisting of triphenyl antimony, triphenylphosphite, butylated hydroxyltoluene, 4-methoxyphenol, propyl gallate, oxalic acid, a phosphite, and combinations thereof. In embodiments, the stabilizers may be selected from the group consisting of triphenyl antimony, triphenylphosphite, butylated hydroxyltoluene, 4-methoxyphenol, propyl gallate, and combinations thereof.

In embodiments, at least 50 wt.% of the stabilizer may be solubilized in the thiol masterbatch composition, based on the total weight of the stabilizer. For instance, in embodiments, at least 60 wt.%, at least 70 wt.%, at least 80 wt.%, at least 90 wt.%, at least 95 wt.%, at least 99 wt.%, or even 100 wt.% of the stabilizer is solubilized in the thiol masterbatch composition. Without intending to be bound by any particular theory, it is believed that a higher solubility of the stabilizer in the thiol masterbatch composition may increase the solubility of the stabilizer in the ultraviolet-curable composition formed from combining the thiol masterbatch composition and the (meth)acrylate composition.

The amount of the stabilizers in the thiol masterbatch composition may vary depending on desired properties of the thiol masterbatch composition, such as solubility of stabilizers and a reactivity of the thiol compounds, or desired properties of the ultraviolet-curable composition comprising the thiol masterbatch composition, such as stabilizer concentration, stability, and storage conditions.

In embodiments, the thiol masterbatch composition can include from 10 parts per million by weight (ppm) to 100,000 ppm of any one of the one or more stabilizers, based on the total weight of the thiol masterbatch composition. For instance, in embodiments, the thiol masterbatch composition can include from 10 ppm to 75,000 ppm, from 10 ppm to 50,000 ppm, from 10 ppm to 25,000 ppm, from 1,000 ppm to 100,000 ppm, from 1,000 ppm to 75,000 ppm, from 1,000 ppm to 50,000 ppm, from 1,000 ppm to 25,000 ppm, from 5,000 ppm to 100,000 ppm, from 5,000 ppm to 75,000 ppm, from 5,000 ppm to 50,000 ppm, from 5,000 ppm to 25,000 ppm, from 10,000 ppm to 100,000 ppm, from 10,000 ppm to 75,000 ppm, from 10,000 ppm to 50,000 ppm, from 10,000 ppm to 25,000 ppm, from 15,000 ppm to 25,000 ppm, or from 20,000 to 25,000 ppm of any one of the one or more stabilizers, based on the total weight of the thiol masterbatch composition.

In embodiments, the thiol masterbatch composition can include from 10 ppm to 200,000 ppm of a total amount of the stabilizers, based on the total weight of the thiol masterbatch composition. For instance, in embodiments, the thiol masterbatch composition can include from 1,000 ppm to 150,000 ppm, from 1,000 to 100,000 ppm, from 1,000 to 75,000 ppm, from 10,000 ppm to 150,000 ppm, from 10,000 to 100,000 ppm, from 10,000 to 75,000 ppm, from 22,000 ppm to 150,000 ppm, from 22,000 to 100,000 ppm, from 22,000 to 75,000 ppm, from 30,000 to 150,000 ppm, from 30,000 to 100,000 ppm, from 30,000 to 75,000 ppm, from 50,000 to 150,000 ppm, from 50,000 to 100,000 ppm, or from 50,000 to 75,000 ppm of a total amount of the stabilizers, based on the total weight of the thiol masterbatch composition.

It should be understood that, when the thiol masterbatch composition includes more than one discrete type of stabilizer, the weight fraction of the stabilizer in the thiol masterbatch composition equals the sum of the individual weight fractions of every discrete type of stabilizer in the thiol masterbatch composition.

In embodiments when at least 50% of the thiol compounds of the thiol masterbatch composition are primary thiols, the thiol masterbatch composition can comprise at least 22,000 ppm of stabilizer, based on the total weight of the thiol masterbatch composition. For instance, in embodiments when at least 50% of the thiol compounds of the thiol masterbatch composition are primary thiols, the thiol masterbatch composition can comprise at least 25,000 ppm, at least 30,000 ppm, at least 35,000 ppm, at least 40,000 ppm, at least 45,000 ppm, or even at least 50,000 ppm of stabilizer, based on the total weight of the thiol masterbatch composition. In embodiments when at least 50% of the thiol compounds of the thiol masterbatch composition are primary thiols, the thiol masterbatch composition can comprise from 22,000 ppm to 200,000 ppm of stabilizer, based on the total weight of the thiol masterbatch composition.

In embodiments when at least 70% of the thiol compounds of the thiol masterbatch composition are primary thiols, the thiol masterbatch composition can comprise at least 22,000 ppm of stabilizer, based on the total weight of the thiol masterbatch composition. For instance, in embodiments when at least 70% of the thiol compounds of the thiol masterbatch composition are primary thiols, the thiol masterbatch composition can comprise at least 25,000 ppm, at least 30,000 ppm, at least 35,000 ppm, at least 40,000 ppm, at least 45,000 ppm, or even at least 50,000 ppm of stabilizer, based on the total weight of the thiol masterbatch composition. In embodiments when at least 70% of the thiol compounds of the thiol masterbatch composition are primary thiols, the thiol masterbatch composition can comprise from 22,000 ppm to 200,000 ppm of stabilizer, based on the total weight of the thiol masterbatch composition.

In embodiments when at least 90% of the thiol compounds of the thiol masterbatch composition are primary thiols, the thiol masterbatch composition can comprise at least 22,000 ppm of stabilizer, based on the total weight of the thiol masterbatch composition. For instance, in embodiments when at least 90% of the thiol compounds of the thiol masterbatch composition are primary thiols, the thiol masterbatch composition can comprise at least 25,000 ppm, at least 30,000 ppm, at least 35,000 ppm, at least 40,000 ppm, at least 45,000 ppm, or even at least 50,000 ppm of stabilizer, based on the total weight of the thiol masterbatch composition. In embodiments when at least 90% of the thiol compounds of the thiol masterbatch composition are primary thiols, the thiol masterbatch composition can comprise from 22,000 ppm to 200,000 ppm of stabilizer, based on the total weight of the thiol masterbatch composition.

In embodiments when less than 50% of the thiol compounds of the thiol masterbatch composition are primary thiols, the thiol masterbatch composition can comprise at least 10,000 ppm of stabilizer, based on the total weight of the thiol masterbatch composition. For instance, when less than 50% of the thiol compounds of the thiol masterbatch composition are primary thiols, the thiol masterbatch composition can comprise at least 12,000 ppm, at least 15,000 ppm, at least 20,000 ppm, at least 22,000 ppm, at least 25,000 ppm, at least 30,000 ppm, at least 35,000 ppm, at least 40,000 ppm, at least 45,000 ppm, or even at least 50,000 ppm of stabilizer, based on the total weight of the thiol masterbatch composition. In embodiments when less than 50% of the thiol compounds of the thiol masterbatch composition are primary thiols, the thiol masterbatch composition can comprise from 10,000 ppm to 100,000 ppm of stabilizer, based on the total weight of the thiol masterbatch composition.

In embodiments when less than 30% of the thiol compounds of the thiol masterbatch composition are primary thiols, the thiol masterbatch composition can comprise at least 10,000 ppm of stabilizer, based on the total weight of the thiol masterbatch composition. For instance, when less than 30% of the thiol compounds of the thiol masterbatch composition are primary thiols, the thiol masterbatch composition can comprise at least 12,000 ppm, at least 15,000 ppm, at least 20,000 ppm, at least 22,000 ppm, at least 25,000 ppm, at least 30,000 ppm, at least 35,000 ppm, at least 40,000 ppm, at least 45,000 ppm, or even at least 50,000 ppm of stabilizer, based on the total weight of the thiol masterbatch composition. In embodiments when less than 30% of the thiol compounds of the thiol masterbatch composition are primary thiols, the thiol masterbatch composition can comprise from 10,000 ppm to 100,000 ppm of stabilizer, based on the total weight of the thiol masterbatch composition.

In embodiments when less than 10% of the thiol compounds of the thiol masterbatch composition are primary thiols, the thiol masterbatch composition can comprise at least 10,000 ppm of stabilizer, based on the total weight of the thiol masterbatch composition. For instance, when less than 10% of the thiol compounds of the thiol masterbatch composition are primary thiols, the thiol masterbatch composition can comprise at least 12,000 ppm, at least 15,000 ppm, at least 20,000 ppm, at least 22,000 ppm, at least 25,000 ppm, at least 30,000 ppm, at least 35,000 ppm, at least 40,000 ppm, at least 45,000 ppm, or even at least 50,000 ppm of stabilizer, based on the total weight of the thiol masterbatch composition. In embodiments when less than 10% of the thiol compounds of the thiol masterbatch composition are primary thiols, the thiol masterbatch composition can comprise from 10,000 ppm to 100,000 ppm of stabilizer, based on the total weight of the thiol masterbatch composition.

### Additional components of the thiol masterbatch composition

In embodiments, the thiol masterbatch composition can include a diluent. In embodiments, the diluent can be a non-reactive diluent, a reactive diluent, or combinations thereof. In other embodiments, the thiol masterbatch composition does not include a diluent. Without intending to be bound by any particular theory, it is believed that a diluent may be included in the thiol masterbatch composition to increase a concentration of dissolved stabilizer in the thiol masterbatch composition.

Examples of suitable non-reactive diluents may include but not be limited to solvents and plasticizers, such as toluene, methyl acetate, butyl acetate, ethyl acetate, methyl ethyl ketone, dimethyl carbonate, mineral oil, phthalates, and combinations thereof.

Examples of suitable reactive diluents may include but not be limited to methyl (meth)acrylate, ethyl (meth)acrylate, hydroxyethyl (meth)acrylate, hydroxypropyl (meth)acrylate, tetrahydrofurfuryl (meth)acrylate, isobornyl (meth)acrylate, 2(2-ethoxyethoxy)ethyl (meth)acrylate, tertbutyl cyclohexyl (meth)acrylate, diethyleneglycol methyl ether (meth)acrylate, 2-phenoxyethyl (meth)acrylate, glycidyl (meth)acrylate, ethoxylated phenyl (meth)acrylate, propoxylated phenyl (meth)acrylate, 3,3,5-trimethyl cyclohexyl (meth)acrylate, ethoxylated nonylphenyl (meth)acrylate, propoxylated nonylphenyl (meth)acrylate, cyclic trimethylolpropane formal (meth)acrylate, methoxy polyethylene glycol (350) mono(meth)acrylate, methoxy polyethylene glycol (550) mono(meth)acrylate, ethylene glycol mono(meth)acrylate, propylene glycol mono(meth)acrylate, ethoxytriglycol (meth)acrylate, bisphenol A diallyl ether, ethylene glycol diallyl ether, ethylene glycol monoallyl ether, polyethylene glycol monoallyl ether, polyethylene glycol diallyl ether, and combinations thereof. In embodiments, the diluent is a polar monofunctional (meth)acrylate monomer, which may serve to dissolve the stabilizer.

In embodiments, the diluent can comprise (meth)acrylate monomers, including acrylate monomers and methacrylate monomers. In embodiments, the diluent can comprise at least 50% by weight of (meth)acrylate monomers, based on the total weight of the diluent. For instance, in embodiments, the diluent can comprise at least 50 wt.%, at least 60 wt.%, at least 70 wt.%, at least 80 wt.%, at least 90 wt.%, at least 95 wt.%, or at least 99 wt.% of (meth)acrylate monomers, based on the total weight of the diluent.

In embodiments, the diluent comprises a methacrylate monomer. In embodiments, the diluent is a methacrylate monomer. In embodiments, the diluent can comprise at least 50% by weight of methacrylate monomers, based on the total weight of the diluent. For instance, in embodiments, the diluent can comprise at least 50 wt.%, at least 60 wt.%, at least 70 wt.%, at least 80 wt.%, at least 90 wt.%, at least 95 wt.%, or at least 99 wt.% of methacrylate monomers, based on the total weight of the diluent.

In embodiments, the diluent comprises an acrylate monomer. In embodiments, the diluent is an acrylate monomer. In embodiments, the diluent can comprise at least 50% by weight of acrylate monomers, based on the total weight of the diluent. For instance, in embodiments, the diluent can comprise at least 50 wt.%, at least 60 wt.%, at least 70 wt.%, at least 80 wt.%, at least 90 wt.%, at least 95 wt.%, or at least 99 wt.% of acrylate monomers, based on the total weight of the diluent.

In embodiments, the diluent is monofunctional. In other embodiments, the diluent can be multifunctional, where the individual monomer unit comprises two or more active sites that participate in crosslinking upon curing. An example of monofunctional monomer units can include 2-hydroxyethyl methacrylate. An example of multifunctional monomer units can include divalent monomer units, such as polyethylene glycol (200) di(meth)acrylate, ethoxylated bisphenol A di(meth)acrylate, ethylene glycol di(meth)acrylate, tetraethylene glycol di(meth)acrylate, triethylene glycol di(meth)acrylate, 1,3-butylene glycol di(meth)acrylate 1,4-butanediol di(meth)acrylate, 1,6-hexanediol di(meth)acrylate, neopentyl glycol di(meth)acrylate, Polyethylene glycol (400) di(meth)acrylate, Polyethylene glycol (600) di(meth)acrylate, cyclohexane dimethanol di(meth)acrylate, ethoxylated hexanediol di(meth)acrylate, and combinations thereof.

The weight fraction of the diluent in the thiol masterbatch composition will vary depending on the amount of stabilizer in the thiol masterbatch composition and solubility of the stabilizers. The weight fraction of the diluent in the thiol masterbatch composition may vary depending on desired properties of the thiol masterbatch composition, such as viscosity or stabilizer concentration.

In embodiments, the thiol masterbatch composition can include from 0 wt.% to 25 wt.% of the diluent, based on the total weight of the thiol masterbatch composition. For instance, in embodiments, the thiol masterbatch composition can include from 0 wt.% to 20 wt.%, from 0 wt.% to 15 wt.%, from 0 wt.% to 10 wt.%, from 0 wt.% to 5 wt.%, include from 5 wt.% to 20 wt.%, from 5 wt.% to 15 wt.%, or from 5 wt.% to 10 wt.%, of the diluent, based on the total weight of the thiol masterbatch composition.

It should be understood that, when the thiol masterbatch composition includes more than one discrete type of diluent, the weight fraction of the diluent in the thiol masterbatch composition equals the sum of the individual weight fractions of every discrete type of diluent in the thiol masterbatch composition.

### Properties of the thiol masterbatch composition

In embodiments, the thiol masterbatch composition can have improved properties such as a high concentration of stabilizer, increased stability, and resistance to premature polymerization.

The viscosity of the thiol masterbatch composition can be monitored to demonstrate stability of the thiol masterbatch composition and resistance to premature polymerization.

In embodiments, an initial viscosity of the thiol masterbatch composition can be from 10 centipoise (cps) to 4,000 cps, such as from 20 cps to 200 cps.

The thiol masterbatch composition can be aged, heated, or both aged and heated to demonstrate stability of the thiol masterbatch composition.

In embodiments, when the thiol masterbatch composition is aged for at least 28 days, a difference between a final viscosity of the thiol masterbatch composition and the initial viscosity of the thiol masterbatch composition can be 10,000 cps or less. For instance, in embodiments, the difference between the final viscosity of the thiol masterbatch composition and the initial viscosity of the thiol masterbatch composition can be 8,000 cps or less, 5,000 cps or less, 4,000 cps or less, 3,000 cps or less, 2,000 cps or less, 1,000 cps or less, 500 cps or less, or even 100 cps or less.

In embodiments, when the thiol masterbatch composition is heated at a temperature of at least 60 degrees Celsius (°C) or greater for at least 28 days, the difference between the final viscosity of the thiol masterbatch composition and the initial viscosity of the thiol masterbatch composition can be 10,000 cps or less. For instance, in embodiments, the final viscosity of the thiol masterbatch composition can be 8,000 cps or less, 5,000 cps or less, 4,000 cps or less, 3,000 cps or less, 2,000 cps or less, 1,000 cps or less, 500 cps or less, or even 100 cps or less than the initial viscosity of the thiol masterbatch composition before heating.

Without intending to be bound by any particular theory, it is believed that the thiol masterbatch composition can be prepared such that when it is added to a (meth)acrylate composition, the combination exhibits improved stability, with resistance to premature polymerization.

### (Meth)acrylate composition

In embodiments, a (meth)acrylate composition can comprise a (meth)acrylate monomer, a (meth)acrylate oligomer, and a photoinitiator.

### (Meth)acrylate monomer of (meth)acrylate composition

In embodiments, the (meth)acrylate monomer of the (meth)acrylate composition can include methacrylate monomers and acrylate monomers, such as trimethacrylate and diacrylate.

In embodiments, the (meth)acrylate monomer of the (meth)acrylate composition is monofunctional. In other embodiments, the (meth)acrylate monomer of the (meth)acrylate composition can be multifunctional, where the individual monomer unit comprises two or more active sites that participate in crosslinking upon curing.

In embodiments, the (meth)acrylate monomer may comprise a mixture of (meth)acrylate monomers.

The (meth)acrylate monomer may have a molecular weight of less than 1,000 g/mol, in particular from 100 to 550 g/mol, more particularly 200 to 500 g/mol.

Suitable (meth)acrylate monomers can include, but not be limited mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a dialcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like. The following compounds are specific examples of mono(meth)acrylate- monomers suitable for use in the curable compositions of the present invention: methyl (meth)acrylate, ethyl (meth)acrylate, n-propyl (meth)acrylate, n-butyl (meth)acrylate, isobutyl (meth)acrylate, n-hexyl (meth)acrylate, 2-ethylhexyl (meth)acrylate, n-octyl (meth)acrylate, isooctyl (meth)acrylate, n-decyl (meth)acrylate, n-dodecyl (meth)acrylate, tridecyl (meth)acrylate, tetradecyl (meth)acrylate, hexadecyl (meth)acrylate, 2-hydroxyethyl (meth)acrylate, 2- and 3-hydroxypropyl (meth)acrylate, 2-methoxyethyl (meth)acrylate, 2-ethoxyethyl (meth)acrylate, 2- and 3-ethoxypropyl (meth)acrylate, tetrahydrofurfuryl (meth)acrylate, alkoxylated tetrahydrofurfuryl (meth)acrylate, 2-(2-ethoxyethoxy)ethyl (meth)acrylate, cyclohexyl (meth)acrylate, glycidyl (meth)acrylate, isodecyl (meth)acrylate, lauryl (meth)acrylate; 2-phenoxyethyl (meth)acrylate, alkoxylated phenol (meth)acrylates, alkoxylated nonylphenol (meth)acrylates, cyclic trimethylolpropane formal (meth)acrylate, isobornyl (meth)acrylate, tricyclodecanemethanol (meth)acrylate, tert-butylcyclohexanol (meth)acrylate, trimethylcyclohexanol (meth)acrylate, diethylene glycol monomethyl ether (meth)acrylate, diethylene glycol monoethyl ether (meth)acrylate, diethylene glycol monobutyl ether (meth)acrylate, triethylene glycol monoethyl ether (meth)acrylate, ethoxylated lauryl (meth)acrylate, methoxy polyethylene glycol (meth)acrylates, hydroxyl ethyl-butyl urethane (meth)acrylates, 3-(2-hydroxyalkyl)oxazolidinone (meth)acrylates, and combinations thereof.

The (meth)acrylate monomer may comprise a (meth)acrylate monomer containing two or more (meth)acrylate groups per molecule. Examples of suitable (meth)acrylate monomers containing two or more (meth)acrylate groups per molecule include acrylate and methacrylate esters of polyhydric alcohols (organic compounds containing two or more, e.g., 2 to 6, hydroxyl groups per molecule). Specific examples of suitable polyhydric alcohols include C2-20 alkylene glycols (glycols having a C2-10 alkylene group may be preferred, in which the carbon chain may be branched; e.g., ethylene glycol, trimethylene glycol, 1,2-propylene glycol, 1,2-butanediol, 1,3-butanediol, 2,3-butanediol, tetramethylene glycol (1,4-butanediol), 1,5-pentanediol, 1,6-hexanediol, 1,8-octanediol, 1,9-nonanediol, 1,12-dodecanediol, cyclohexane-1,4-dimethanol, bisphenols, and hydrogenated bisphenols, as well as alkoxylated (e.g., ethoxylated and/or propoxylated) derivatives thereof), diethylene glycol, glycerin, alkoxylated glycerin, triethylene glycol, dipropylene glycol, tripropylene glycol, trimethylolpropane, alkoxylated trimethylolpropane, ditrimethylolpropane, alkoxylated ditrimethylolpropane, pentaerythritol, alkoxylated pentaerythritol, dipentaerythritol, alkoxylated dipentaerythritol, cyclohexanediol, alkoxylated cyclohexanediol, cyclohexanedimethanol, alkoxylated cyclohexanedimethanol, norbornene dimethanol, alkoxylated norbornene dimethanol, norbornane dimethanol, alkoxylated norbornane dimethanol, polyols containing an aromatic ring, cyclohexane-1,4-dimethanol ethylene oxide adducts, bis-phenol ethylene oxide adducts, hydrogenated bisphenol ethylene oxide adducts, bisphenol propylene oxide adducts, hydrogenated bisphenol propylene oxide adducts, cyclohexane-1,4-dimethanol propylene oxide adducts, sugar alcohols and alkoxylated sugar alcohols. Such polyhydric alcohols may be fully or partially esterified (with (meth)acrylic acid, (meth)acrylic anhydride, (meth)acryloyl chloride or the like), provided they contain at least two (meth)acrylate functional groups per molecule. As used herein, the term "alkoxylated" refers to compounds containing one or more oxyalkylene moieties (e.g., oxyethylene and/or oxypropylene moieties). An oxyalkylene moiety corresponds to the general structure -R-O-, wherein R is a divalent aliphatic moiety such as -CH₂CH₂- or -CH₂CH(CH₃)-. For example, an alkoxylated compound may contain from 1 to 30 oxyalkylene moieties per molecule.

Exemplary (meth)acrylate monomers containing two or more (meth)acrylate groups per molecule may include ethoxylated bisphenol A di(meth)acrylates; triethylene glycol di(meth)acrylate; ethylene glycol di(meth)acrylate; tetraethylene glycol di(meth)acrylate; polyethylene glycol di(meth)acrylates; 1,4-butanediol diacrylate; 1,4-butanediol dimethacrylate; diethylene glycol diacrylate; diethylene glycol dimethacrylate, 1,6-hexanediol diacrylate; 1,6-hexanediol dimethacrylate; neopentyl glycol diacrylate; neopentyl glycol di(meth)acrylate; polyethylene glycol (600) dimethacrylate (where the parenthetical numeral following "polyethylene glycol" is the approximate number average molecular weight of the polyethylene glycol portion); polyethylene glycol (200) diacrylate; 1,12-dodecanediol dimethacrylate; tetraethylene glycol diacrylate; triethylene glycol diacrylate, 1,3-butylene glycol dimethacrylate, tripropylene glycol diacrylate, polybutadiene diacrylate, methyl pentanediol diacrylate; polyethylene glycol (400) diacrylate; ethoxylated (2) bisphenol A dimethacrylate (where the parenthetical numeral following "ethoxylated" is the average number of oxyalkylene moieties per molecule), ethoxylated (3) bisphenol A dimethacrylate, ethoxylated (3) bisphenol A diacrylate, cyclohexane dimethanol dimethacrylate, cyclohexane dimethanol diacrylate, ethoxylated (10) bisphenol A dimethacrylate, dipropylene glycol diacrylate; ethoxylated (4) bisphenol A dimethacrylate, ethoxylated (6) bisphenol A dimethacrylate, ethoxylated (5) bisphenol A dimethacrylate, alkoxylated hexanediol diacrylates, alkoxylated cyclohexane dimethanol diacrylate, dodecane diacrylate, ethoxylated (4) bisphenol A diacrylate, ethoxylated (10) bisphenol A diacrylate, polyethylene glycol (400) dimethacrylate, polypropylene glycol (400) dimethacrylate, metallic diacrylates, modified metallic diacrylates; metallic dimethacrylates; polyethylene glycol (1000) dimethacrylate; methacrylated polybutadiene; propoxylated (2) neopentyl glycol diacrylate (where the parenthetical numeral following "propoxylated" is the average number of oxyalkylene moieties per molecule, ethoxylated (30) bisphenol A dimethacrylate, ethoxylated (30) bisphenol A diacrylate, alkoxylated neopentyl glycol diacrylates, polyethylene glycol dimethacrylates, 1,3-butylene glycol diacrylate, ethoxylated (2) bisphenol A dimethacrylate, dipropylene glycol diacrylate, ethoxylated (4) bisphenol A diacrylate, polyethylene glycol (600) diacrylate; polyethylene glycol (1000) dimethacrylate; tricyclodecane dimethanol diacrylate, propoxylated neopentyl glycol diacrylates such as propoxylated (2) neopentyl glycol diacrylate, diacrylates of alkoxylated aliphatic alcohols; trimethylolpropane trimethacrylate; trimethylolpropane triacrylate; tris (2-hydroxyethyl) isocyanurate triacrylate; ethoxylated (20) trimethylolpropane triacrylate; pentaerythritol triacrylate; ethoxylated trimethylolpropane triacrylate; propoxylated (3) trimethylolpropane triacrylate; ethoxylated (6) trimethylolpropane triacrylate; propoxylated (6) trimethylolpropane triacrylate; ethoxylated, trimethylolpropane triacrylate; alkoxylated trifunctional acrylate esters; trifunctional methacrylate esters; trifunctional acrylate esters; propoxylated (3) glyceryl triacrylate; propoxylated (5.5) glyceryl triacrylate; ethoxylated (5) trimethylolpropane triacrylate; trifunctional phosphoric acid esters; trifunctional acrylic acid esters; pentaerythritol tetraacrylate; di-trimethylolpropane tetraacrylate; ethoxylated (4) pentaerythritol tetraacrylate; pentaerythritol polyoxyethylene tetraacrylate; dipentaerythritol pentaacrylate; pentaacrylate esters, and combinations thereof.

In embodiments, the (meth)acrylate monomer is chosen from methyl (meth)acrylate, ethyl (meth)acrylate, hydroxyethyl (meth)acrylate, hydroxypropyl (meth)acrylate, tetrahydrofurfuryl (meth)acrylate, isobornyl (meth)acrylate, 2(2-ethoxyethoxy)ethyl (meth)acrylate, tertbutyl cyclohexyl (meth)acrylate, diethyleneglycol methyl ether (meth)acrylate, 2-phenoxyethyl (meth)acrylate, glycidyl (meth)acrylate, ethoxylated phenyl (meth)acrylate, propoxylated phenyl (meth)acrylate, 3,3,5-trimethyl cyclohexyl (meth)acrylate, ethoxylated nonylphenyl (meth)acrylate, propoxylated nonylphenyl (meth)acrylate, cyclic trimethylolpropane formal (meth)acrylate, methoxy polyethylene glycol (350) mono(meth)acrylate, methoxy polyethylene glycol (550) mono(meth)acrylate, ethylene glycol mono(meth)acrylate, propylene glycol mono(meth)acrylate, ethoxytriglycol (meth)acrylate. Polyethylene glycol (200) di(meth)acrylate, ethoxylated bisphenol A di(meth)acrylate, ethylene glycol di(meth)acrylate, tetraethylene glycol di(meth)acrylate, triethylene glycol di(meth)acrylate, 1,3-butylene glycol di(meth)acrylate 1,4-butanediol di(meth)acrylate, 1,6-hexanediol di(meth)acrylate, neopentyl glycol di(meth)acrylate, Polyethylene glycol (400) di(meth)acrylate, Polyethylene glycol (600) di(meth)acrylate, cyclohexane dimethanol di(meth)acrylate, ethoxylated hexanediol di(meth)acrylate, and combinations thereof.

In embodiments, the (meth)acrylate monomer is ethoxylated (3) bisphenol A diacrylate, trimethylolpropane trimethactlyate, dipentaerythritol pentaacrylate, or combinations thereof.

The weight fraction of the (meth)acrylate monomer of the (meth)acrylate composition will vary depending on desired properties of the (meth)acrylate composition, such as viscosity, or desired properties of an ultraviolet-curable composition, or cured composition formed therefrom comprising the (meth)acrylate composition, such as adhesion, hardness, cure speed, or cross link density.

In embodiments, the (meth)acrylate composition can include from 10 wt.% to 80 wt.% of the (meth)acrylate monomer, based on the total weight of the (meth)acrylate composition. For instance, in embodiments, the (meth)acrylate composition can include from 10 wt.% to 70 wt.%, from 20 wt.% to 60 wt.%, or from 30 wt.% to 50 wt.% of the (meth)acrylate monomer, based on the total weight of the (meth)acrylate composition.

It should be understood that, when the (meth)acrylate composition includes more than one discrete type of (meth)acrylate monomer, the weight fraction of the (meth)acrylate monomer in the (meth)acrylate composition equals the sum of the individual weight fractions of every discrete type of (meth)acrylate monomer in the (meth)acrylate composition.

### (Meth)acrylate oligomer of the (meth)acrylate composition

In embodiments, the (meth)acrylate oligomer of the (meth)acrylate composition can include methacrylate oligomers and acrylate oligomers, such as urethane methacrylate oligomer.

In embodiments, the (meth)acrylate oligomer may have 1 to 18 (meth)acrylate groups, in particular 2 to 6 (meth)acrylate groups, more particularly 2 to 6 acrylate groups.

In embodiments, the (meth)acrylate oligomer of the (meth)acrylate composition is monofunctional. In other embodiments, the (meth)acrylate oligomer of the (meth)acrylate composition can be multifunctional, where the individual monomer units of the oligomer unit comprise two or more active sites that participate in crosslinking upon curing.

Suitable (meth)acrylate oligomers can include, but not be limited (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers"), and combinations thereof.

In embodiments, the (meth)acrylate oligomer is chosen from urethane (meth)acrylate oligomers, polyester (meth)acrylate oligomers, polyether (meth)acrylate oligomers, polycarbonate (meth)acrylate oligomers, polybutadiene (meth)acrylate oligomers, epoxy (meth)acrylate oligomers, or combinations thereof.

In embodiments, the (meth)acrylate oligomer is an aliphatic urethane methacrylate oligomer.

In embodiments, the (meth)acrylate oligomer may have a weight average molecular weight of at least 600 grams per mole (g/mol). In embodiments, the oligomer may have a weight average molecular weight from 600 g/mol to 600,000 g/mol.

The weight fraction of the (meth)acrylate oligomer of the (meth)acrylate composition will vary depending on desired properties of the (meth)acrylate composition, such as viscosity, or desired properties of an ultraviolet-curable composition comprising the (meth)acrylate composition or a cured composition formed from curing the ultraviolet-curable composition, such as flexibility, strength, or modulus.

In embodiments, the (meth)acrylate composition can include from 10 wt.% to 80 wt.% of the (meth)acrylate oligomer, based on the total weight of the (meth)acrylate composition. For instance, in embodiments, the (meth)acrylate composition can include from 10 wt.% to 80 wt.%, from 15 wt.% to 75 wt.%, or from 20 wt.% to 70 wt. % of the (meth)acrylate oligomer, based on the total weight of the (meth)acrylate composition.

It should be understood that, when the (meth)acrylate composition includes more than one discrete type of (meth)acrylate oligomer, the weight fraction of the (meth)acrylate oligomer in the (meth)acrylate composition equals the sum of the individual weight fractions of every discrete type of (meth)acrylate oligomer in the (meth)acrylate composition.

### Photoinitiator of the (meth)acrylate composition

In embodiments, the photoinitiator of the (meth)acrylate composition can include any photoinitiator know in the art. Photoinitiators may include free-radical photoinitiators. The photoinitiator may be selected so that it is susceptible to activation by photons of the wavelength associated with the actinic radiation (e.g., ultraviolet radiation, visible light) intended to be used to cure a curable composition.

Suitable photoinitiators can include, but not be limited to benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and combinations thereof.

Examples of suitable photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, a benzophenone/1-hydroxycyclohexyl phenyl ketone blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one, and combinations thereof.

In embodiments, the photoinitiator is chosen from a benzophenone such as SpeedCure^{®} BP (benzophenone), SpeedCure^{®} 7005 (polymeric benzophenone), SpeedCure^{®} 7006 (polymeric benzophenone), SpeedCure^{®} EMK (4,4'-bis(diethylamino)benzophenone) or SpeedCure^{®} BMS (4-benzoyl-4'-methyldiphenyl sulphide); a thioxanthone such as SpeedCure^{®} 7010 (polymeric thioxanthone), SpeedCure^{®} ITX (isopropylthioxanthone), SpeedCure^{®} DETX (2,4-diethylthioxanthone) or SpeedCure^{®} CPTX (1-chloro-4-propoxythioxanthone); an α-hydroxy acetophenone; an acylphosphine oxide such as SpeedCure^{®} BPO (phenyl bis(2,4,6-trimethylbenzoyl)-phosphine oxide), SpeedCure^{®} TPO (2,4,6-trimethylbenzoyldiphenylphosphine oxide) or SpeedCure^{®} TPO-L (ethyl (2,4,6-trimethylbenzoyl)phenyl phosphinate); a phenylglyoxylate such as SpeedCure^{®} MBF (methylbenzoylformate); or combinations thereof. In embodiments, the photoinitiator comprises ethyl (2,4,6,-trimethylbenzoyl) phenylphosphinate. In embodiments, the photoinitiator is ethyl (2,4,6,-trimethylbenzoyl) phenylphosphinate.

The weight fraction of the photoinitiator will vary depending on properties of the (meth)acrylate composition, such as storage conditions and desired stability, or desired properties of an ultraviolet-curable composition comprising the (meth)acrylate composition, such as cure speed and depth of cure.

In embodiments, the (meth)acrylate composition can include from 0.01 wt.% to 15 wt.% of the photoinitiator, based on the total weight of the (meth)acrylate composition. For instance, in embodiments, the (meth)acrylate composition can include from 0.01 wt. % to 10 wt. %, from 0.1 wt. % to 5 wt. %, or from 0.5 wt. % to 4 wt.%, of the photoinitiator, based on the total weight of the (meth)acrylate composition.

It should be understood that, when the (meth)acrylate composition includes more than one discrete type of photoinitiator, the weight fraction of the photoinitiator in the (meth)acrylate composition equals the sum of the individual weight fractions of every discrete type of photoinitiator in the (meth)acrylate composition.

### Additional components of the (meth)acrylate composition

In embodiments, additives may also be included, or optionally included, in the (meth)acrylate compositions described herein. For example, one or more colorants (e.g., dyes, pigments), adhesion promoters, fillers, rheology modifiers, thixotropic agents, plasticizers, UV absorbers, UV stabilizing agents and/or dispersants may be included.

In embodiments, the (meth)acrylate composition can comprise thiol compounds. In other embodiments, the (meth)acrylate composition does not comprise thiol compounds. In embodiments, the (meth)acrylate composition comprises from 0 wt.% to 5 wt.% of thiol compounds, based on the total weight of the (meth)acrylate composition. For instance, in embodiments, the (meth)acrylate composition comprises from 0 wt.% to 4 wt.%, from 0 wt.% to 3 wt.%, from 0 wt.% to 2 wt.%, or from 0 wt.% to 1 wt.% of thiol compounds, based on the total weight of the (meth)acrylate composition.

### Ultraviolet-curable composition

The ultraviolet-curable composition can comprise a thiol masterbatch composition and a (meth)acrylate composition.

The thiol masterbatch composition of the ultraviolet-curable composition can include any embodiments, both individually or in any combination, of the thiol masterbatch composition described in this disclosure.

The (meth)acrylate composition of the ultraviolet-curable composition can include any embodiments, both individually or in any combination, of the (meth)acrylate composition described in this disclosure.

### Properties of the ultraviolet-curable composition

In embodiments, the ultraviolet-curable composition can comprise from 1 wt.% to 40 wt.% of the thiol compounds, such as from 1 wt.% to 10 wt.%, from 1 wt.% to 15 wt.% from 1 wt.% to 20 wt.%, from 1 wt.% to 30 wt.%, from 5 wt.% to 10 wt.%, from 5 wt.% to 15 wt.% from 5 wt.% to 20 wt.%, or from 5 wt.% to 30 wt.%, based on the total weight of the ultraviolet-curable composition.

In embodiments, the ultraviolet-curable composition can comprise from 10 ppm to 50,000 ppm of the stabilizer such as from 1,000 ppm to 30,000 ppm, from 1,000 ppm to 15,000 ppm, from 5,000 ppm to 30,000 ppm, or from 5,000 ppm to 15,000 ppm, based on the total weight of the ultraviolet-curable composition.

In embodiments, the ultraviolet-curable composition can comprise from 0 wt.% to 80 wt.% of the diluent, such as from 0 wt.% to 60 wt.%, from 0 wt.% to 50 wt.%, from 0 wt.% to 40 wt.%, from 0 wt.% to 30 wt.%, from 0 wt.% to 20 wt.% from 0 wt.% to 15 wt.%, from 10 wt.% to 80 wt.%, from 10 wt.% to 70 wt.%, from 10 wt.% to 60 wt.%, from 10 wt.% to 50 wt.%, from 10 wt.% to 40 wt.%, from 10 wt.% to 30 wt.%, from 10 wt.% to 20 wt.%, from 20 wt.% to 80 wt.%, from 20 wt.% to 70 wt.%, from 20 wt.% to 60 wt.%, from 20 wt.% to 50 wt.%, from 20 wt.% to 40 wt.%, or from 20 wt.% to 30 wt.%, based on the total weight of the ultraviolet-curable composition.

In embodiments, the ultraviolet-curable composition can comprise from 10 wt.% to 80 wt.% of the (meth)acrylate monomer, such as from 10 wt.% to 80 wt.%, from 10 wt.% to 70 wt.%, from 10 wt.% to 60 wt.%, from 10 wt.% to 50 wt.%, from 10 wt.% to 40 wt.%, from 10 wt.% to 30 wt.%, from 10 wt.% to 20 wt.%, from 20 wt.% to 80 wt.%, from 20 wt.% to 70 wt.%, from 20 wt.% to 60 wt.%, from 20 wt.% to 50 wt.%, from 20 wt.% to 40 wt.%, from 20 wt.% to 30 wt.%, from 30 wt.% to 80 wt.%, from 30 wt.% to 70 wt.%, from 30 wt.% to 60 wt.%, from 30 wt.% to 50 wt.%, from 30 wt.% to 40 wt.%, from 40 wt.% to 80 wt.%, from 40 wt.% to 70 wt.%, from 40 wt.% to 60 wt.%, or from 40 wt.% to 50 wt.%, based on the total weight of the ultraviolet-curable composition.

In embodiments, the ultraviolet-curable composition can comprise from 10 wt.% to 80 wt.% of the (meth)acrylate oligomer, such as from 10 wt.% to 80 wt.%, from 10 wt.% to 70 wt.%, from 10 wt.% to 60 wt.%, from 10 wt.% to 50 wt.%, from 10 wt.% to 40 wt.%, from 10 wt.% to 30 wt.%, from 10 wt.% to 20 wt.%, from 20 wt.% to 80 wt.%, from 20 wt.% to 70 wt.%, from 20 wt.% to 60 wt.%, from 20 wt.% to 50 wt.%, from 20 wt.% to 40 wt.%, from 20 wt.% to 30 wt.%, from 30 wt.% to 80 wt.%, from 30 wt.% to 70 wt.%, from 30 wt.% to 60 wt.%, from 30 wt.% to 50 wt.%, from 30 wt.% to 40 wt.%, from 40 wt.% to 80 wt.%, from 40 wt.% to 70 wt.%, from 40 wt.% to 60 wt.%, or from 40 wt.% to 50 wt.%, based on the total weight of the ultraviolet-curable composition.

In embodiments, the ultraviolet-curable composition can comprise from 1 wt.% to 10 wt.% of the photoinitiator, such as from 1 wt.% to 8 wt.%, from 1 wt.% to 6 wt.%, from 1 wt.% to 4 wt.%, from 1 wt.% to 3 wt.%, from 2 wt.% to 10 wt.%, from 2 wt.% to 8 wt.%, from 2 wt.% to 6 wt.%, from 2 wt.% to 4 wt.%, from 2 wt.% to 3 wt.%, from 3 wt.% to 10 wt.%, from 3 wt.% to 8 wt.%, from 3 wt.% to 6 wt.%, or from 3 wt.% to 4 wt.%, based on the total weight of the ultraviolet-curable composition.

In embodiments, the ultraviolet-curable composition can have improved properties such as a high concentration of stabilizer, increased stability at higher temperatures, and long shelf time.

The viscosity of the ultraviolet-curable composition can be monitored to demonstrate stability of the ultraviolet-curable composition and resistance to premature polymerization.

An initial viscosity of the ultraviolet-curable composition can be determined after preparing. In embodiments, an initial viscosity of the ultraviolet-curable composition can be from 1,000 centipoise (cps) to 20,000 cps, such as from 2,000 cps to 6,000 cps.

The viscosity of the ultraviolet-curable composition can be monitored to demonstrate stability of the ultraviolet-curable composition and resistance to premature polymerization.

The ultraviolet-curable composition can be aged, heated, or both aged and heated to demonstrate stability of the ultraviolet-curable composition.

In embodiments, when the ultraviolet-curable composition is aged for at least 28 days at room temperature, a difference between a final viscosity of the ultraviolet-curable composition and the initial viscosity of the ultraviolet-curable composition can be 15,000 cps or less. For instance, in embodiments, the difference between a final viscosity of the ultraviolet-curable composition and the initial viscosity of the ultraviolet-curable composition can be 12,000 cps or less, 10,000 cps or less, 8,000 cps or less, 5,000 cps or less, 4,000 cps or less, 3,000 cps or less, 2,000 cps or less, 1,000 cps or less, 500 cps or less, or even 100 cps or less.

In embodiments, when the ultraviolet-curable composition is heated at a temperature of at least 60 degrees Celsius (°C) or greater for at least 28 days, a difference between a final viscosity of the ultraviolet-curable composition and the initial viscosity can be 15,000 cps or less. For instance, in embodiments, the difference between the final viscosity of the ultraviolet-curable composition and the initial viscosity of the ultraviolet-curable composition can be 12,000 cps or less, 10,000 cps or less, 8,000 cps or less, 5,000 cps or less, 4,000 cps or less, 3,000 cps or less, 2,000 cps or less, 1,000 cps or less, 500 cps or less, or even 100 cps or less.

### Curing the ultraviolet-curable composition

In embodiments, the ultraviolet-curable composition, as described herein, can be cured to form a cured composition. In embodiments, the ultraviolet-curable composition is exposed to ultraviolet radiation to cure the ultraviolet-curable composition.

### Kit for providing an ultraviolet-curable composition

In embodiments, a kit for providing an ultraviolet-curable composition comprises a first part and a second part separate from the first part.

In embodiments, the first part includes a thiol masterbatch composition, which can include any embodiments, both individually or in any combination, of the thiol masterbatch composition described herein.

In embodiments, the first part may not include a photoinitiator, an oligomer, or neither a photoinitiator and an oligomer.

In embodiments, the second part includes a (meth)acrylate composition, which can include any embodiments, both individually or in any combination, of the (meth)acrylate composition described herein.

In embodiments, the second part may not include thiol compounds.

In embodiments, the kit can include the first part and the second part packaged in two separate compartments. For instance, the kit can include a two-component cartridge.

In embodiments, the kit can be a ready-for-use kit, including the thiol masterbatch composition in a first compartment or drum and the (meth)acrylate composition in a second compartment or drum, in proportions suitable for direct mixing of the two components, for example by means of a metering pump.

In embodiments, the kit additionally includes one or more means making possible the mixing of the first part and the second part. For instance, the mixing means can be chosen from metering pumps or static mixers with a diameter suited to the amounts used.

In embodiments, the kit additionally can include a separate container for combining the first part and second part of the kit.

In embodiments, the kit additionally includes an application device.

In embodiments, the kit additionally includes instructions for dispensing, applying, and curing the composition to provide a cured composition. The instructions may be provided in the form of an instruction sheet and/or printed on a package which contains the components of the kit.

Without intending to be bound by any particular theory, it is believed that by separating the thiol compounds in the thiol masterbatch composition from the components of the (meth)acrylate composition, the stability of thiol masterbatch and the (meth)acrylate composition may increase, which may reduce premature polymerization.

### EXAMPLES

The various embodiments disclosed herein will be further clarified by the following examples. The examples are illustrative in nature, and should not be understood to limit the embodiments disclosed herein.

### Material

The following materials were used in the examples:

**[Table 1]**

| Abbreviation | Chemical name | Supplier |
|---|---|---|
| HEMA | 2-hydroxyethyl methacrylate | Sartomer |
| PETMP | pentaerythritol tetrakis(3-mercaptopropionate) | Bruno Bock |
| PETMB | pentaerythritol tetrakis(3-mercaptobutylate), KarenzMT^{™} PE1 | Showa Denko K.K. |
| TPP | triphenylphosphite | Sigma Aldrich |
| TPA | triphenyl antimony | Sigma Aldrich |
| BHT | butylated hydroxyltoluene | Sigma Aldrich |
| MeHQ | 4-methoxyphenol | Sigma Aldrich |
| ProGal | Propyl gallate | Sigma Aldrich |
| CN1968 | Aliphatic urethane methacrylate oligomer | Sartomer |
| SR349 | ethoxylated (3) bisphenol A diacrylate | Sartomer |
| SR350 | trimethylolpropane trimethactlyate | Sartomer |
| PL-TPO-L | ethyl (2,4,6,-trimethylbenzoyl) phenylphosphinate | PL Industries |

### Methods

The following methods were used in the application:

### Method A - Viscosity

The viscosity was measured using a Brookfield DV-III+ viscometer with SC-27 spindle at 20°C. Each sample was measured at a certain RPM needed to achieve 50% torque range. Viscosity was measured in centipoise (cps) after temperature and sample stabilization was achieved (10 minutes).

### Thiol Masterbatch Compositions

Table 2 shows the components used to form the thiol masterbatch composition of Examples E1 to E10.

Thiol masterbatch compositions were made by adding the components listed in Table 2 to a container and mixed until homogenous at 2000 revolutions per minute (RPM) using a Flactek^{®} high speed mixed for two minutes.

**[Table 2]**

| Example | Amount, g (ppm) | | | | | | | |
|---|---|---|---|---|---|---|---|---|
| | HEMA | PETMP | PETMB | TPA | TPP | BHT | MeHQ | ProGal |
| E1 | 6.25 | 18.75 | | 0.188 (7,500) | | | | |
| E2 | 6.25 | 18.75 | | | 0.3125 (12,500) | 0.3125 (12,500) | | |
| E3 | 6.25 | 18.75 | | | 0.250 (10,000) | | | 0.250 (10,000) |
| E4 | 6.25 | 18.75 | | | 0.250 (10,000) | | 0.250 (10,000) | 0.250 (10,000) |
| E5 | 6.25 | 18.75 | | | 0.250 (10,000) | 0.250 (10,000) | | 0.250 (10,000) |
| E6 | 6.25 | 18.75 | | 0.625 (25,000) | | | | |
| E7 | 6.25 | 18.75 | | | 0.625 (25,000) | 0.625 (25,000) | | |
| E8 | 6.25 | 18.75 | | | 0.50 (20,000) | | | 0.50 (20,000) |
| E9 | 6.25 | 18.75 | | | 0.50 (20,000) | | 0.50 (20,000) | 0.50 (20,000) |
| E10 | 6.25 | 18.75 | | | 0.50 (20,000) | 0.50 (20,000) | | 0.50 (20,000) |
| E11 | 6.25 | | 18.75 | 0.12 (500) | | | | |
| E12 | 6.25 | | 18.75 | | 0.12 (500) | 0.12 (500) | | |
| E13 | 6.25 | | 18.75 | | 0.12 (500) | | | 0.12 (500) |
| E14 | 6.25 | | 18.75 | | 0.12 (500) | | 0.12 (500) | 0.12 (500) |
| E15 | 6.25 | | 18.75 | | 0.12 (500) | 0.12 (500) | | 0.12 (500) |
| E16 | | | 100 | 2.5 (25,000) | | | | |
| E17 | | | 100 | | 2.5 (25,000) | 2.5 (25,000) | | |
| E18 | | | 100 | | 2.0 (20,000) | | | 2.0 (20,000) |
| E19 | | | 100 | | 1.5 (15,000) | | 1.5 (15,000) | 1.5 (15,000) |
| E20 | | | 100 | | 1.5 (15,000) | 1.5 (15,000) | | 1.5 (15,000) |

The thiol masterbatch compositions of Examples E1 to E20 included various concentrations of stabilizers, either a primary thiol or secondary thiol, and with and without a diluent. Example E2 is a thiol masterbatch composition including a primary thiol (PETMP), a diluent (HEMA), 12,500 ppm of one stabilizer (TPP), and 12,500 ppm of a second stabilizer (BHT). Example E11 is a thiol masterbatch composition including a secondary thiol (PETMB), a diluent (HEMA), and 500 ppm of one stabilizer (TPP), and 500 ppm of a second stabilizer (BHT). Example E17 is a thiol masterbatch composition including a secondary thiol (PETMB), 12,500 ppm of one stabilizer (TPP), and 12,500 ppm of a second stabilizer (BHT). Examples E16-E20 did not include a diluent, but at least 25,000 ppm of stabilizer was dissolved in the thiol masterbatch composition of Examples E16-E20.

### Stability of Thiol Masterbatch Compositions

The viscosity of the thiol masterbatch compositions of Examples E1 to E20 was measured to evaluate the stability of the thiol masterbatch compositions. Specifically, an initial viscosity of Examples E1 to E20 was measured after preparing E1 to E20, according to "Method A-Viscosity" described in this disclosure. Examples E1 to E20 were then heated at a temperature of 60 °C for 28 days. A final viscosity of Examples E1 to E20 was measured after heating at a temperature of 60 °C for a 28 days and cooling to 25 °C for at least 12 hours in the dark, according to "Method A-Viscosity" described in this disclosure. Table 3 shows the initial viscosity and final viscosity of Examples E1 to E20.

**[Table 3]**

| Example | Initial Viscosity (centipoise) | Final Viscosity after 28 days at 60 °C (centipoise) |
|---|---|---|
| E1 | 70 | 1200 |
| E2 | 70 | 1120 |
| E3 | 70 | 1160 |
| E4 | 70 | 1260 |
| E5 | 70 | 780 |
| E6 | 70 | 360 |
| E7 | 70 | 1450 |
| E8 | 70 | 1370 |
| E9 | 70 | 1770 |
| E10 | 70 | 890 |
| E11 | 120 | 3425 |
| E12 | 120 | 2340 |
| E13 | 120 | 2555 |
| E14 | 120 | 2855 |
| E15 | 120 | 2540 |
| E16 | 1082 | 1650 |
| E17 | 1082 | 1018 |
| E18 | 1082 | 1170 |
| E19 | 1082 | 1045 |
| E20 | 1082 | 1155 |

The stability of the thiol masterbatch compositions were evaluated by comparing an initial viscosity of the thiol masterbatch compositions of Examples E1-E20, and a final viscosity of Examples E1-E20 after heating for 28 days. As exemplified by Table 3, the thiol masterbatch compositions of Examples E1-E20 are stable, even at high temperatures. Examples E1-E10, which included a primary thiol and a methacrylate monomer, exhibited an increase in viscosity of 1700 cps or less after heating. Examples E1 1-E15, which included a secondary thiol, a methacrylate monomer, and 1,500 ppm or less of stabilizer, exhibited an increase in viscosity of less than 3,400 cps after heating. Examples E16-E20, which included a secondary thiol, at least 25,000 ppm of stabilizer, and did not include a diluent, exhibited an increase in viscosity of 600 cps or less after heating.

As exemplified by Table 2 and 3, the selection of certain thiol compounds, certain stabilizers, the amount of stabilizer, and selection of a diluent in the thiol masterbatch composition may be tailored to achieve both a desired stability of the thiol masterbatch composition, as indicated by viscosity before and after heating, and concentration of dissolved stabilizer.

### (Meth)acrylate Compositions

Table 4 shows the components used to form the (meth)acrylate composition of Example E21 in weight percent (wt.%) based on the total weight of the (meth)acrylate composition.

**[Table 4]**

| Component | Wt. % |
|---|---|
| CN1968 | 56.6% |
| SR350 | 26.3% |
| SR349 | 13.1% |
| PL-TPO-L | 4.0% |

### Ultraviolet-Curable Compositions

Table 5 shows the components used to form the ultraviolet-curable compositions of Examples E23-E32 (amounts are in % by weight based on the weight of the ultraviolet-curable composition).

Ultraviolet-curable compositions E23-E32 were made by adding thiol masterbatch compositions of Examples E1 to E10 and the (meth)acrylate composition of Example E21 at a weight ratio of thiol masterbatch composition to (meth)acrylate composition of 1:4 to a container and mixed until homogenous at 2000 revolutions per minute (RPM) using a Flactek^{®} high speed mixed for two minutes.

**[Table 5]**

| Example | Thiol masterbatch composition, (wt. %) | (Meth)acrylate composition, (wt.%) |
|---|---|---|
| E23 | E1 (20) | E21 (80) |
| E24 | E2 (20) | E21 (80) |
| E25 | E3 (20) | E21 (80) |
| E26 | E4 (20) | E21 (80) |
| E27 | E5 (20) | E21 (80) |
| E28 | E6 (20) | E21 (80) |
| E29 | E7 (20) | E21 (80) |
| E30 | E8 (20) | E21 (80) |
| E31 | E9 (20) | E21 (80) |
| E32 | E10 (20) | E21 (80) |

### Stability of Ultraviolet-Curable Compositions

The viscosity of ultraviolet-curable compositions of Examples E23 to E32 was measured to evaluate the stability of the ultraviolet-curable compositions comprising the thiol masterbatch compositions. Specifically, an initial viscosity of Examples E23 to E32 was measured after preparing E23 to E32, according to "Method A-Viscosity" described in this disclosure. A portion of Examples E23 to E32 was then maintained at room temperature (25 °C) for 28 days. A separate portion of Examples E23 to E32 were heated at a temperature of 60 °C for 28 days. A final viscosity of Examples E23 to E32 was measured for both portions after 28 days at 25 °C and 60 °C, where all viscosity measurements were taken at 25 °C, according to "Method A-Viscosity" described in this disclosure. Table 6 shows the initial viscosity, the final viscosity after 28 days at room temperature, and the final viscosity after 28 days at 60 °C of Examples E23 to E32.

**[Table 6]**

| Example | Initial Viscosity (centipoise) | Final Viscosity after 28 days at 25 °C, (centipoise) | Final Viscosity after 28 days at 60 °C (centipoise) |
|---|---|---|---|
| E23 | 4,100 | 3,070 | 85,000 |
| E24 | 4,100 | 4,050 | N/A, partial gelation |
| E25 | 4,100 | 4,125 | N/A, partial gelation |
| E26 | 4,100 | 4,180 | N/A, partial gelation |
| E27 | 4,100 | 4,100 | 6,400 |
| E28 | 4,700 | 4,850 | N/A, partial gelation |
| E29 | 4,700 | 4,750 | 5,200 |
| E30 | 4,700 | 5,400 | 4,850 |
| E31 | 4,700 | 4,900 | 4,900 |
| E32 | 4,700 | 5,025 | 6,400 |

The stability of the ultraviolet-curable compositions was evaluated by comparing an initial viscosity of the ultraviolet-curable compositions of Examples E23-E32, and a final viscosity of Examples E23-E32 after 28 days, both at room temperature and heating at a temperature of 60 °C. As exemplified by Table 6, the ultraviolet-curable compositions of Examples E23-E32 are stable at room temperature after 28 days. Examples E7 and E29-E32 were stable after 28 days, even at high temperature.

As exemplified by Tables 5 and 6, the selection of certain stabilizers and the amount of stabilizer in the thiol masterbatch composition may be tailored to achieve a desired stability of the ultraviolet-curable composition comprising the thiol masterbatch composition, as indicated by viscosity before and after aging, with and without heating. The formation of a thiol masterbatch composition having a higher concentration of both thiol compounds and stabilizer, as described herein, may be added to (meth)acrylate compositions to provide an ultraviolet-curable composition having increased stability, even at higher temperatures.

### CLAUSES

Further aspects of the invention are provided by the subject matter of the following clauses:
Clause 1. A thiol masterbatch composition for preparing an ultraviolet-curable composition, the thiol masterbatch composition comprising: at least 70% by weight of thiol compounds, based on the total weight of the thiol masterbatch composition; and at least one stabilizer, wherein the thiol compounds are chosen from primary thiols, secondary thiols, or combinations thereof; and wherein: at least 50% by weight of the thiol compounds based on the total weight of the thiol compounds are primary thiols and the thiol masterbatch composition comprises at least 22,000 parts per million by weight (ppm) of stabilizer, based on the total weight of the thiol masterbatch composition; or less than 50% by weight of the thiol compounds based on the total weight of the thiol compounds are primary thiols and the thiol masterbatch composition comprises at least 10,000 parts per million by weight (ppm) of stabilizer, based on the total weight of the thiol masterbatch composition.
Clause 2. The thiol masterbatch composition of Clause 1, wherein the thiol compounds are chosen from pentaerythritol tetrakis(3-mercaptopropionate), pentaerythritol tetrakis(3-mercaptobutylate), or combinations thereof.
Clause 3. The thiol masterbatch composition of Clause 1 or 2, wherein the at least one stabilizer is chosen from radical scavenger compounds, hydroperoxide decomposer compounds, or hydrogen donor compounds.
Clause 4. The thiol masterbatch composition of any one of Clauses 1 to 3, wherein the at least one stabilizer is chosen from triphenyl antimony, triphenylphosphite, butylated hydroxyltoluene, 4-methoxyphenol, propyl gallate, oxalic acid, a phosphite, or combinations thereof.
Clause 5. The thiol masterbatch composition of any one of Clauses 1 to 4, wherein at least 50% by weight of the stabilizer is solubilized in the thiol masterbatch composition, based on the total weight of the stabilizer.
Clause 6. The thiol masterbatch composition of any one of Clauses 1 to 5, further comprising a diluent chosen from a non-reactive diluent, a reactive diluent, or combinations thereof. Clause 7. The thiol masterbatch composition of Clause 6, wherein the diluent comprises at least 50% by weight of (meth)acrylate monomers based on the total weight of the diluent.
Clause 8. The thiol masterbatch composition of Clause 6 or 7, wherein the diluent is a methacrylate monomer.
Clause 9. The thiol masterbatch composition of any one of Clauses 1 to 8, wherein when the thiol masterbatch composition is heated at a temperature of at least 60 degrees Celsius (°C) for at least 28 days, a difference between a final viscosity of the thiol masterbatch composition after heating and an initial viscosity of the thiol masterbatch composition before heating is less than 10,000 centipoise (cps).
Clause 10. The thiol masterbatch composition of any one of Clauses 1 to 9, wherein the thiol compounds are primary thiols.
Clause 11. The thiol masterbatch composition of any one of Clauses 1 to 10, wherein the thiol compounds are secondary thiols.
Clause 12. The thiol masterbatch composition of any one of Clauses 1 to 11, wherein the thiol masterbatch composition comprises at least 50,000 ppm of stabilizer, based on the total weight of the thiol masterbatch composition.
Clause 13. The thiol masterbatch composition of any one of Clauses 1 to 12, wherein when the thiol masterbatch composition is heated at a temperature of at least 60 degrees Celsius (°C) for at least 28 days, a difference between a final viscosity of the thiol masterbatch composition after heating and an initial viscosity of the thiol masterbatch composition before heating is less than 5,000 centipoise (cps).
Clause 14. The thiol masterbatch composition of any one of Clauses 1 to 13, wherein when the thiol masterbatch composition is heated at a temperature of at least 60 degrees Celsius (°C) for at least 28 days, a difference between a final viscosity of the thiol masterbatch composition after heating and an initial viscosity of the thiol masterbatch composition before heating is less than 2,000 centipoise (cps).
Clause 15. A kit for providing an ultraviolet-curable composition comprising: a first part comprising a thiol masterbatch composition, wherein the thiol masterbatch composition comprises at least 70% by weight of thiol compounds, based on the total weight of the thiol masterbatch composition, and at least one stabilizer; and a second part separate from the first part and comprising a (meth)acrylate composition comprising a (meth)acrylate monomer, a (meth)acrylate oligomer, and a photoinitiator.
Clause 16. The kit of Clause 15, wherein the thiol compounds are chosen from primary thiols, secondary thiols, or combinations thereof; and wherein: at least 50% by weight of the thiol compounds based on the total weight of the thiol compounds are primary thiols and the thiol masterbatch composition comprises at least 22,000 parts per million by weight (ppm) of stabilizer, based on the total weight of the thiol masterbatch composition; or less than 50% by weight of the thiol compounds based on the total weight of the thiol compounds are primary thiols and the thiol masterbatch composition comprises at least 10,000 parts per million by weight (ppm) of stabilizer, based on the total weight of the thiol masterbatch composition.
Clause 17. The kit of Clause 15 or 16, wherein the thiol compounds are chosen from pentaerythritol tetrakis(3-mercaptopropionate), pentaerythritol tetrakis(3-mercaptobutylate), or combinations thereof.
Clause 18. The kit of any one of Clauses 15 to 17, wherein the at least one stabilizer is chosen from radical scavenger compounds, hydroperoxide decomposer compounds, or hydrogen donor compounds.
Clause 19. The kit of any one of Clauses 15 to 18, wherein the at least one stabilizer is chosen from triphenyl antimony, triphenylphosphite, butylated hydroxyltoluene, 4-methoxyphenol, propyl gallate, oxalic acid, a phosphite, or combinations thereof.
Clause 20. The kit of any one of Clauses 15 to 19, wherein at least 50% by weight of the stabilizer is solubilized in the thiol masterbatch composition, based on the total weight of the stabilizer.
Clause 21. The kit of any one of Clauses 15 to 20, wherein the kit further comprises a separate container for combining the first part and the second part.
Clause 22. The kit of any one of Clauses 15 to 21, wherein the kit further comprises an application device.
Clause 23. The kit of any one of Clauses 15 to 22, wherein the second part does not comprise thiol compounds.
Clause 24. The kit of any one of Clauses 15 to 23, wherein the kit further comprises a two-component cartridge.
Clause 25. A method of preparing an ultraviolet-curable composition, the method comprising: combining a thiol masterbatch composition and a (meth)acrylate composition to obtain an ultraviolet-curable composition; wherein the thiol masterbatch composition comprises at least 70% by weight of thiol compounds, based on the total weight of the thiol masterbatch composition, and at least one stabilizer; and the (meth)acrylate composition comprises a (meth)acrylate monomer, a (meth)acrylate oligomer, and a photoinitiator.
Clause 26. The method of Clause 25, wherein a weight ratio of the thiol masterbatch composition to the (meth)acrylate composition is from 1: 1 to 1:20.
Clause 27. The method of Clause 25 or 26, wherein the thiol compounds are chosen from primary thiols, secondary thiols, or combinations thereof; and wherein: at least 50% by weight of the thiol compounds based on the total weight of the thiol compounds are primary thiols and the thiol masterbatch composition comprises at least 22,000 parts per million by weight (ppm) of stabilizer, based on the total weight of the thiol masterbatch composition; or less than 50% by weight of the thiol compounds based on the total weight of the thiol compounds are primary thiols and the thiol masterbatch composition comprises at least 10,000 parts per million by weight (ppm) of stabilizer, based on the total weight of the thiol masterbatch composition.
Clause 28. The method of any one of Clauses 25 to 27, wherein the thiol compounds are chosen from pentaerythritol tetrakis(3-mercaptopropionate), pentaerythritol tetrakis(3-mercaptobutylate), or combinations thereof.
Clause 29. The method of any one of Clauses 25 to 28, wherein the at least one stabilizer is chosen from radical scavenger compounds, hydroperoxide decomposer compounds, or hydrogen donor compounds.
Clause 30. The method of any one of Clauses 25 to 29, wherein the at least one stabilizer is chosen from triphenyl antimony, triphenylphosphite, butylated hydroxyltoluene, 4-methoxyphenol, propyl gallate, oxalic acid, a phosphite, or combinations thereof.
Clause 31. An ultraviolet-curable composition prepared by the method of any one of Clauses 25 to 30.
Clause 32. The ultraviolet-curable composition of Clause 31, wherein when the ultraviolet-curable composition is heated at a temperature of at least 60 degrees Celsius (°C) for at least 28 days, a difference between a viscosity of the ultraviolet-curable composition after heating and an initial viscosity of the ultraviolet-curable composition is 15,000 centipoise (cps) or less.
Clause 33. The ultraviolet-curable composition of Clause 31, wherein when the ultraviolet-curable composition is heated at a temperature of at least 60 degrees Celsius (°C) for at least 28 days, a difference between a viscosity of the ultraviolet-curable composition after heating and an initial viscosity of the ultraviolet-curable composition is 10,000 centipoise (cps) or less.
Clause 34. The ultraviolet-curable composition of Clause 31, wherein when the ultraviolet-curable composition is heated at a temperature of at least 60 degrees Celsius (°C) for at least 28 days, a difference between a viscosity of the ultraviolet-curable composition after heating and an initial viscosity of the ultraviolet-curable composition is 5,000 centipoise (cps) or less.
Clause 35. A cured composition obtained by exposing the ultraviolet-curable composition of any one of Clauses 31 to 34 to ultraviolet radiation to cure the ultraviolet-curable composition.

It will be apparent to persons of ordinary skill in the art that various modifications and variations can be made without departing from the scope disclosed herein. Since modifications, combinations, sub-combinations, and variations of the disclosed embodiments, which incorporate the spirit and substance disclosed herein, may occur to persons of ordinary skill in the art, the scope disclosed herein should be construed to include everything within the scope of the appended claims and their equivalents.

For the purposes of defining the present technology, the transitional phrase "consisting of" may be introduced in the claims as a closed preamble term limiting the scope of the claims to the recited components or steps and any naturally occurring impurities. For the purposes of defining the present technology, the transitional phrase "consisting essentially of" may be introduced in the claims to limit the scope of one or more claims to the recited elements, components, materials, or method steps as well as any non-recited elements, components, materials, or method steps that do not materially affect the novel characteristics of the claimed subject matter.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

1. A thiol masterbatch composition for preparing an ultraviolet-curable composition, the thiol masterbatch composition comprising:
at least 70% by weight of thiol compounds, based on the total weight of the thiol masterbatch composition; and
at least one stabilizer,
wherein the thiol compounds are chosen from primary thiols, secondary thiols, or
combinations thereof; and
wherein:
at least 50% by weight of the thiol compounds based on the total weight of the thiol compounds are primary thiols and the thiol masterbatch composition comprises at least 22,000 parts per million by weight (ppm) of stabilizer, based on the total weight of the thiol masterbatch composition; or
less than 50% by weight of the thiol compounds based on the total weight of the thiol compounds are primary thiols and the thiol masterbatch composition comprises at least 10,000 parts per million by weight (ppm) of stabilizer, based on the total weight of the thiol masterbatch composition.

2. The thiol masterbatch composition of claim 1, wherein the thiol compounds are chosen from pentaerythritol tetrakis(3-mercaptopropionate), pentaerythritol tetrakis(3-mercaptobutylate), or combinations thereof.

3. The thiol masterbatch composition of claim 1 or 2, wherein the at least one stabilizer is chosen from radical scavenger compounds, hydroperoxide decomposer compounds, or hydrogen donor compounds.

4. The thiol masterbatch composition of any one of claims 1 to 3, wherein the at least one stabilizer is chosen from triphenyl antimony, triphenylphosphite, butylated hydroxyltoluene, 4-methoxyphenol, propyl gallate, oxalic acid, a phosphite, or combinations thereof.

5. The thiol masterbatch composition of any one of claims 1 to 4, wherein at least 50% by weight of the stabilizer is solubilized in the thiol masterbatch composition, based on the total weight of the stabilizer.

6. The thiol masterbatch composition of any one of claims 1 to 5, further comprising a diluent chosen from a non-reactive diluent, a reactive diluent, or combinations thereof.

7. The thiol masterbatch composition of claim 6, wherein the diluent comprises at least 50% by weight of (meth)acrylate monomers based on the total weight of the diluent.

8. The thiol masterbatch composition of claim 6 or 7, wherein the diluent is a methacrylate monomer.

9. The thiol masterbatch composition of any one of claims 1 to 8, wherein when the thiol masterbatch composition is heated at a temperature of at least 60 degrees Celsius (°C) for at least 28 days, a difference between a final viscosity of the thiol masterbatch composition after heating and an initial viscosity of the thiol masterbatch composition before heating is less than 10,000 centipoise (cps).

10. A kit for providing an ultraviolet-curable composition comprising:
a first part comprising a thiol masterbatch composition, wherein the thiol masterbatch composition comprises at least 70% by weight of thiol compounds, based on the total weight of the thiol masterbatch composition, and at least one stabilizer; and
a second part separate from the first part and comprising a (meth)acrylate composition comprising a (meth)acrylate monomer, a (meth)acrylate oligomer, and a photoinitiator.

11. A method of preparing an ultraviolet-curable composition, the method comprising:
combining a thiol masterbatch composition and a (meth)acrylate composition to obtain an ultraviolet-curable composition;
wherein:
the thiol masterbatch composition comprises at least 70% by weight of thiol compounds, based on the total weight of the thiol masterbatch composition, and at least one stabilizer; and
the (meth)acrylate composition comprises a (meth)acrylate monomer, a (meth)acrylate oligomer, and a photoinitiator.

12. The method of claim 11, wherein a weight ratio of the thiol masterbatch composition to the (meth)acrylate composition is from 1:1 to 1:20.

13. An ultraviolet-curable composition prepared by the method of claim 11 or 12.

14. The ultraviolet-curable composition of claim 13, wherein when the ultraviolet-curable composition is heated at a temperature of at least 60 degrees Celsius (°C) for at least 28 days, a difference between a viscosity of the ultraviolet-curable composition after heating and an initial viscosity of the ultraviolet-curable composition is 15,000 centipoise (cps) or less.

15. A cured composition obtained by exposing the ultraviolet-curable composition of claim 13 to ultraviolet radiation to cure the ultraviolet-curable composition.
